# EUROPEAN PATENT APPLICATION

(11) **EP 4 840 674 A1**
(43) Date of publication of application: **18.11.2026**
(21) Application number: 24924410.4
(22) Date of filing: 18.02.2024
(51) Int. Cl.: B60L 7/10, B60L 15/20, B62D 5/04

(54) **TORQUE VECTOR CONTROL METHOD IN ENERGY RECOVERY SCENARIO, STORAGE MEDIUM, AND VEHICLE**

(71) Applicant: Yinwang Intelligent Technologies Co., Ltd., Shenzhen, Guangdong 518110 (CN)
(72) Inventor: HE, Lang, Shenzhen, Guangdong 518129 (CN); XIN, Zilin, Shenzhen, Guangdong 518129 (CN); YAN, Niwei, Shenzhen, Guangdong 518129 (CN); LIU, Donghao, Shenzhen, Guangdong 518129 (CN); LUO, Jie, Shenzhen, Guangdong 518129 (CN)
(74) Representative: Gill Jennings & Every LLP
(86) International application number: PCT/CN2024/077369
(87) International publication number: WO 2025/171640

(57) **Abstract**

A torque vector control method in an energy recovery scenario, a storage medium, and a vehicle are disclosed. The torque vector control method includes: determining, based on traveling information of a vehicle, whether the vehicle is in a turning state; and if the vehicle is in the turning state, adjusting a front axle torque of the vehicle from a front axle initial torque to a front axle preset torque, and adjusting a rear axle torque of the vehicle from a rear axle initial torque to a rear axle preset torque; or if the vehicle is not in the turning state, enabling the vehicle to maintain a current front axle initial torque and a current rear axle initial torque. In this design, a recovery torque can be adjusted when the vehicle turns, to help improve stability and maneuverability of the vehicle.

## Description

### TECHNICAL FIELD

The present invention relates to the field of automotive technologies, and in particular, to a torque vector control method in an energy recovery scenario, a storage medium, and a vehicle.

### BACKGROUND

With development of a new energy vehicle drive technology, drive units gradually increase and develop towards distributed driving. Generally, in an energy recovery scenario, a new energy vehicle needs to distribute a torque to different drive units. However, when the vehicle turns, stability and maneuverability of the vehicle are affected, and not only driving experience is affected, but also a safety hazard exists.

### SUMMARY

Embodiments of this application provide a torque vector control method in an energy recovery scenario, a storage medium, and a vehicle, to improve stability of the vehicle.

According to a first aspect, an embodiment of this application provides a torque vector control method in an energy recovery scenario. The torque vector control method includes:
determining, based on traveling information of a vehicle, whether the vehicle is in a turning state; and
if the vehicle is in the turning state, adjusting a front axle torque of the vehicle from a front axle initial torque to a front axle preset torque, and adjusting a rear axle torque of the vehicle from a rear axle initial torque to a rear axle preset torque; or
if the vehicle is not in the turning state, controlling the vehicle to maintain the current front axle initial torque and the current rear axle initial torque.

According to the solution provided in this embodiment of this application, whether the vehicle is in the turning state can be determined based on the traveling information of the vehicle. When the vehicle is not in the turning state, current torque distribution is maintained. When the vehicle is in the turning state, the front axle torque is adjusted from the front axle initial torque to the front axle preset torque, and the rear axle torque is adjusted from the rear axle initial torque to the rear axle preset torque. In this design, torque distribution can be adjusted in different traveling statuses of the vehicle, so that the vehicle in the energy recovery scenario can still maintain good maneuverability and stability when the traveling status is changed. This helps improve traveling safety and better meet an actual requirement.

In a possible implementation, before determining, based on the traveling information of the vehicle, whether the vehicle is in the turning state, the method includes:
collecting information output or stored by at least one of a brake electronic control unit, a vehicle control unit, a motor control unit, a vehicle dashboard, a button input, a vehicle sensor, and a signal processing module, and using the information as the traveling information.

The information about the vehicle is obtained to determine the traveling status of the vehicle, so as to determine whether the vehicle is in the turning state, and adjust recovery torque distribution based on the traveling status of the vehicle, so that the vehicle can have good maneuverability and stability in different traveling statuses.

In a possible implementation, the traveling information includes steering wheel angle information.

The steering wheel angle information is collected, so that the traveling status of the vehicle can be determined. When the vehicle turns, a driver needs to rotate a steering wheel to make a turn. Whether the vehicle is in the turning state can be determined based on the steering wheel angle information, to adjust recovery torque distribution, so that maneuverability and stability of the vehicle in the turning state are improved in the energy recovery scenario.

In a possible implementation, the traveling information includes vehicle speed information and/or chassis stability information.

The traveling status of the vehicle can be further obtained through collection of the vehicle speed information and the chassis stability information.

In a possible implementation, information output or stored by at least one of an anti-lock braking system, a torque control system, and an electronic stability control is collected and used as the chassis stability information.

The traveling status of the vehicle can be easily determined through collection of the chassis stability information.

In a possible implementation, the step of determining, based on the traveling information of the vehicle, whether the vehicle is in the turning state includes:
when a steering wheel angle of the vehicle exceeds 30°, a vehicle speed exceeds 20 kilometers per hour, and a chassis stability function is not triggered or not degraded, determining that the vehicle is in the turning state; or
when a steering wheel angle of the vehicle does not exceed 30°, a vehicle speed does not exceed 20 kilometers per hour, or a chassis stability function is not triggered or not degraded, determining that the vehicle is not in the turning state.

When the steering wheel angle is small, this adjustment may be a normal adjustment in a traveling process, and the vehicle does not enter the turning state. When the vehicle speed is low, because the vehicle is in a low-speed traveling status, stability is high and impact of recovery torque distribution on vehicle stability is small. Therefore, recovery torque distribution may not be adjusted when the vehicle turns at a low speed. When the chassis stability function is triggered or degraded, it indicates that the vehicle may currently be in an extreme condition like unstableness. Chassis stability functions such as an ABS, a TCS, and an ESC have higher priorities. When a problem occurs in vehicle stability and the vehicle is in the extreme condition, the chassis stability function preferably takes over vehicle control, to improve vehicle safety. Therefore, when the vehicle meets all of the following conditions: the steering wheel angle exceeds 30°, the vehicle speed exceeds 20 km/h, and the chassis stability function is not triggered or degraded, a recovery torque adjustment can be started, the front axle torque may be adjusted to the front axle preset torque, and the rear axle torque may be adjusted to the rear axle preset torque, to improve vehicle stability. If any condition is not met, it indicates that the torque adjustment may not be performed on the vehicle currently, or a module with a higher priority controls the vehicle.

In a possible implementation, after adjusting each of the front axle torque and the rear axle torque of the vehicle from the initial torque to the preset torque, the torque vector control method in the energy recovery scenario includes:
determining whether a steering wheel angle of the vehicle is less than a preset angle; and
if the steering wheel angle of the vehicle is less than the preset angle, restoring the front axle torque of the vehicle to the front axle initial torque, and restoring the rear axle torque of the vehicle to the rear axle initial torque; or
if the steering wheel angle of the vehicle is not less than the preset angle, controlling the front axle torque of the vehicle to maintain the front axle preset torque, and controlling the rear axle torque of the vehicle to maintain the rear axle preset torque.

The steering wheel angle can be detected to determine whether the vehicle has finished turning, so that the torque can be adjusted based on an actual traveling status of the vehicle. This improves energy recovery efficiency of the vehicle, and also improves maneuverability and stability of the vehicle.

In a possible implementation, the preset angle is 20°.

In a turning process, a driver may adjust the steering wheel angle within a specific range based on an actual requirement. Such a design can help reduce a possibility of misjudgment on whether the vehicle is in the turning state when the driver adjusts the steering wheel angle slightly. Because an angle for determining whether the vehicle ends the turning state is less than an angle for determining whether the vehicle enters the turning state and has a specific difference, when the driver reduces the steering wheel angle in the turning process, it can still be determined that the vehicle is in the turning state, to reduce a possibility of repeatedly adjusting the front axle torque and the rear axle torque when the driver adjusts the steering wheel angle slightly. This helps improve stability and maneuverability of the vehicle, and better meet an actual use requirement.

In a possible implementation, after adjusting the front axle torque of the vehicle from the front axle initial torque to the front axle preset torque, and adjusting the rear axle torque of the vehicle from the rear axle initial torque to the rear axle preset torque, the torque vector control method in the energy recovery scenario includes:
determining whether a vehicle speed of the vehicle is less than a preset vehicle speed; and
if the vehicle speed of the vehicle is less than the preset vehicle speed, restoring the front axle torque of the vehicle to the front axle initial torque, and restoring the rear axle torque of the vehicle to the rear axle initial torque; or
if the steering wheel angle of the vehicle is not less than the preset angle, controlling the front axle torque of the vehicle to maintain the front axle preset torque, and controlling the rear axle torque of the vehicle to maintain the rear axle preset torque.

When the vehicle speed decreases, because stability of the vehicle is high when the vehicle travels at a low speed, and impact of the energy recovery scenario on the stability of the vehicle is low, it is unnecessary to enhance the stability of the vehicle by adjusting a recovery torque, so that adjustment of the front axle torque and the rear axle torque may be ended, and the torques are respectively restored to states before the adjustment.

In a possible implementation, the preset vehicle speed is 15 kilometers per hour.

When the vehicle travels at a low speed, maneuverability and stability of the vehicle are high, and impact of the energy recovery scenario on stability of the vehicle is low. Even if the vehicle is in the turning state, it is unnecessary to enhance stability of the vehicle by adjusting the torque of the vehicle.

In a possible implementation, after adjusting the front axle torque of the vehicle from the front axle initial torque to the front axle preset torque, and adjusting the rear axle torque of the vehicle from the rear axle initial torque to the rear axle preset torque, the torque vector control method in the energy recovery scenario includes:
determining whether a bottom plate stability function of the vehicle is triggered or degraded; and
if the bottom plate stability function of the vehicle is triggered or degraded, restoring the front axle torque of the vehicle to the front axle initial torque, and restoring the rear axle torque of the vehicle to the rear axle initial torque; or
if the bottom plate stability function of the vehicle is not triggered or degraded, controlling the front axle torque of the vehicle to maintain the front axle preset torque, and controlling the rear axle torque of the vehicle to maintain the rear axle preset torque.

When the chassis stability function is triggered or degraded, it indicates that the vehicle is currently in an extreme condition and has poor stability, and the vehicle needs to be controlled by using the chassis stability function, to improve stability of the vehicle. Compared with that in which torque adjustment in the energy recovery scenario, the chassis stability function has a higher priority in this case. Therefore, the recovery torque adjustment needs to be ended, and the chassis stability function takes over the control of the vehicle.

In a possible implementation, the preset torque of the front axle torque includes a front axle slip-based feedback torque and a front axle maneuverability-based feedback torque, the preset torque of the rear axle torque includes a rear axle slip-based feedback torque and a rear axle maneuverability-based feedback torque, the vehicle includes at least two motors, at least one motor is located on a front axle of the vehicle, and at least one motor is located on a rear axle of the vehicle.

The step of adjusting the front axle torque of the vehicle from the front axle initial torque to the front axle preset torque and adjusting the rear axle torque of the vehicle from the rear axle initial torque to the rear axle preset torque includes:
when a difference between the front axle slip-based feedback torque and an expected slip-based feedback torque exceeds a preset range, adjusting the front axle slip-based feedback torque, for the difference between the front axle slip-based feedback torque and the expected slip-based feedback torque to fall within the preset range;
when a difference between the rear axle slip-based feedback torque and the expected slip-based feedback torque exceeds the preset range, adjusting the rear axle slip-based feedback torque, for the difference between the rear axle slip-based feedback torque and the expected slip-based feedback torque to fall within the preset range;
when a difference between the front axle maneuverability-based feedback torque and an expected maneuverability-based feedback torque exceeds a preset range, adjusting the front axle maneuverability-based feedback torque, for the difference between the front axle maneuverability-based feedback torque and the expected maneuverability-based feedback torque to fall within the preset range; and
when a difference between the rear axle maneuverability-based feedback torque and the expected maneuverability-based feedback torque exceeds the preset range, adjusting the rear axle maneuverability-based feedback torque, for the difference between the rear axle maneuverability-based feedback torque and the expected maneuverability-based feedback torque to fall within the preset range.

In the energy recovery scenario, a rear axle tire has a low adhesion limit, and sliding is more likely to occur. Therefore, rear axle slip-based feedback torque distribution of the rear axle may be reduced, and front axle slip-based feedback torque distribution of the front axle may be increased, to reduce a possibility of vehicle sliding. To improve vehicle maneuverability and improve vehicle steering flexibility, front axle maneuverability-based feedback torque distribution of the front axle may be reduced, and rear axle maneuverability-based feedback torque distribution of the rear axle may be increased.

In a possible implementation, a first motor is disposed on the front axle, a second motor is disposed on the rear axle, and two first motors are disposed on the front axle, and/or two second motors are disposed on the rear axle.

The step of adjusting the front axle torque of the vehicle from the front axle initial torque to the front axle preset torque and adjusting the rear axle torque of the vehicle from the rear axle initial torque to the rear axle preset torque includes:
adjusting a torque of the first motor based on the front axle preset torque, and adjusting a torque of the second motor based on the rear axle preset torque.

When the front axle and/or the rear axle include two motors, that is, when the vehicle is in a three-motor distributed drive configuration or a four-motor distributed drive configuration, the front axle torque and/or the rear axle torque need to be distributed between two motors on a same axle. A total torque of two motors on the front axle meets the front axle preset torque, and/or two motors on the rear axle meet the rear axle preset torque, to improve stability and maneuverability of the vehicle.

According to a second aspect of this application, a storage medium is provided. The storage medium is configured to store the torque vector control method in the energy recovery scenario according to any one of the foregoing implementations.

This application further provides a vehicle, including a front axle and a rear axle. The vehicle includes a control component, and the control component is configured to determine, based on traveling information of the vehicle, whether the vehicle is in a turning state; and when the vehicle is in the turning state, a front axle initial torque of the vehicle is adjusted to a front axle preset torque, and a rear axle torque of the vehicle is adjusted to a rear axle initial torque; or when the vehicle is not in the turning state, the vehicle maintains a front axle initial torque and a rear axle initial torque.

This application provides a torque vector control method in an energy recovery scenario, a storage medium, and a vehicle. The torque vector control method includes: determining, based on traveling information of a vehicle, whether the vehicle is in a turning state; and if the vehicle is in the turning state, adjusting a front axle torque of the vehicle from a front axle initial torque to a front axle preset torque, and adjusting a rear axle torque of the vehicle from a rear axle initial torque to a rear axle preset torque; or if the vehicle is not in the turning state, maintaining a current front axle initial torque and a current rear axle initial torque of the vehicle. In this design, a recovery torque can be adjusted when the vehicle turns, to help improve stability and maneuverability of the vehicle.

### BRIEF DESCRIPTION OF DRAWINGS

FIG. 1 is a flowchart of a torque vector control method in an energy recovery scenario according to this application;
FIG. 2 is a diagram of a first embodiment of a torque vector control method in an energy recovery scenario according to this application;
FIG. 3 is a diagram of a second embodiment of a torque vector control method in an energy recovery scenario according to this application;
FIG. 4 is a diagram of a third embodiment of a torque vector control method in an energy recovery scenario according to this application;
FIG. 5 is a diagram of a dual-motor distributed drive configuration according to this application;
FIG. 6 is a diagram of a principle of torque distribution in a dual-motor distributed drive configuration according to this application;
FIG. 7 is a diagram of a three-motor distributed drive configuration according to this application;
FIG. 8 is a diagram of a principle of torque distribution in a three-motor distributed drive configuration according to this application;
FIG. 9 is a diagram of a state of a torque vector control in an energy recovery scenario according to this application; and
FIG. 10 is a diagram of a torque vector control in an energy recovery scenario according to this application.

### DESCRIPTION OF EMBODIMENTS

For better understanding of technical solutions of this specification, the following describes embodiments of this application in detail with reference to accompanying drawings.

It should be noted that the described embodiments are merely some but not all of embodiments of this specification. All other embodiments obtained by a person of ordinary skill in the art based on embodiments of this specification without creative efforts shall fall within the protection scope of this specification.

Terms used in embodiments of this application are merely for the purpose of describing specific embodiments, but are not intended to limit this specification. The terms "a", "said" and "the" of singular forms used in embodiments and the appended claims of this application are also intended to include plural forms, unless otherwise specified in the context clearly.

With development of technologies, technologies for new energy vehicles has become more mature; as a quantity of driving units grows, the development trend is moving towards distributed driving. Because there are a plurality of driving units, a longitudinal force requirement of the entire vehicle needs to be distributed to different driving units. During energy recovery, a torque needs to be distributed to the different driving units according to a specific rule or method. When a traveling status of a vehicle changes, for example, from straight traveling to turning, the traveling status change affects maneuverability and stability of the vehicle, and driving experience deteriorates.

In view of this, embodiments of this application provide a torque vector control method in an energy recovery scenario, to improve stability of a vehicle.

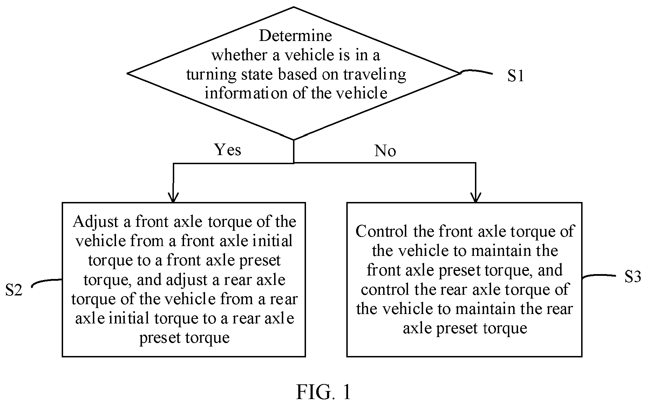

As shown in FIG. 1, an embodiment of this application provides a torque vector control method in an energy recovery scenario. The torque vector control method includes the following steps.

S1: Determine, based on traveling information of a vehicle, whether the vehicle is in a turning state.

If the vehicle is in the turning state, step S2 is performed; and if the vehicle is not in the turning state, step S3 is performed.

S2: Adjust a front axle torque of the vehicle from a front axle initial torque to a front axle preset torque, and adjust a rear axle torque of the vehicle from a rear axle initial torque to a rear axle preset torque.

S3: Control the vehicle to maintain a current front axle initial torque and a current rear axle initial torque.

When the vehicle is already in an energy recovery scenario, that is, an energy recovery function is already enabled, a torque is distributed between drive units after energy recovery is enabled. When the vehicle turns, because a traveling status of the vehicle changes, a torque distribution manner before the turning is not applicable to the vehicle in the turning state, and consequently, stability and maneuverability of the vehicle are reduced. In addition, because the maneuverability and the stability are reduced, a safety hazard exists in a traveling process of the vehicle.

According to the solution provided in this embodiment of this application, whether the vehicle is in the turning state can be determined based on traveling information of the vehicle. When the vehicle is not in the turning state, current torque distribution is maintained. When the vehicle is in the turning state, the front axle torque is adjusted from the front axle initial torque to the front axle preset torque, and the rear axle torque is adjusted from the rear axle initial torque to the rear axle preset torque. In this design, torque distribution can be adjusted in different traveling statuses of the vehicle, so that the vehicle in the energy recovery scenario can still maintain good maneuverability and stability when the traveling status is changed. This helps improve traveling safety and better meet an actual requirement.

In a possible implementation, before step S1, the method further includes:
collecting information output by at least one of a brake electronic control unit, a vehicle control unit, a motor control unit, a vehicle dashboard, a button input, a vehicle sensor, and a signal processing module, and using the information as the traveling information.

Specifically, whether the vehicle is in the turning state may be determined by using the traveling information of the vehicle. A detection module may collect information about modules such as an electronic control unit (electronic control unit, ECU), a vehicle control unit (vehicle control unit, VCU), a motor control unit (motor control unit, MCU), a vehicle dashboard or button input, driver input information module, a vehicle sensor module, a signal processing module, and an associated ECU. The electronic control unit may include a brake ECU. Whether a driver enables a related function may be obtained through collection of the vehicle dashboard and the button input. The collected information entered by the driver includes but is not limited to an accelerator pedal, a steering wheel angle, and the like. A driver's operation status can be determined by using the collected information entered by the driver, and then the traveling status of the vehicle can be easily determined. The vehicle sensor module may collect a wheel speed, a vehicle speed, an acceleration, a yaw rate, and the like of the vehicle. The signal module may be configured to convert a unit, to unify a signal unit and perform effective determining. The brake ECU and the MCU feed back a brake function status, a driving torque, and the like, to obtain a feedback status of a vehicle actuator.

The information about the vehicle is obtained to determine the traveling status of the vehicle, so as to determine whether the vehicle is in the turning state, and adjust recovery torque distribution based on the traveling status of the vehicle, so that the vehicle can have good maneuverability and stability in different traveling statuses.

In a possible implementation, the traveling information of the vehicle includes steering wheel angle information.

The steering wheel angle information is collected, so that the traveling status of the vehicle can be determined. When the vehicle turns, a driver needs to rotate a steering wheel to make a turn. Whether the vehicle is in the turning state can be determined based on the steering wheel angle information, to adjust recovery torque distribution, so that maneuverability and stability of the vehicle in the turning state are improved in the energy recovery scenario.

In a possible implementation, the traveling information includes vehicle speed information and/or chassis stability information.

The traveling status of the vehicle can be further obtained through collection of the vehicle speed information and the chassis stability information.

The chassis stability information includes but is not limited to an anti-lock braking system (anti-lock braking system, ABS), a torque control system (torque control system, TCS), an electronic stability control (electronic stability control, ESC) system, and the like.

The traveling status of the vehicle can be easily determined through collection of the chassis stability information.

In a possible implementation, step S1 includes: determining whether the steering wheel angle of the vehicle exceeds 30°, whether the vehicle speed exceeds 20 kilometers per hour, and whether the chassis stability function is triggered or degraded.

When the steering wheel angle of the vehicle exceeds 30°, the vehicle speed exceeds 20 kilometers per hour, and the chassis stability function is not triggered or not degraded, it is determined that the vehicle is in the turning state.

When the steering wheel angle of the vehicle does not exceed 30°, the vehicle speed does not exceed 20 kilometers per hour, or the chassis stability function is not triggered or not degraded, it is determined that the vehicle is not in the turning state.

When the steering wheel angle is small, this adjustment may be a normal adjustment in a traveling process, and the vehicle does not enter the turning state. When the vehicle speed is low, because the vehicle is in a low-speed traveling status, stability is high and impact of recovery torque distribution on vehicle stability is small. Therefore, recovery torque distribution may not be adjusted when the vehicle turns at a low speed. When the chassis stability function is triggered or degraded, it indicates that the vehicle may currently be in an extreme condition like unstableness. Chassis stability functions such as an ABS, a TCS, and an ESC have higher priorities. When a problem occurs in vehicle stability and the vehicle is in the extreme condition, the chassis stability function preferably takes over vehicle control, to improve vehicle safety. Therefore, when the vehicle meets all of the following conditions: the steering wheel angle exceeds 30°, the vehicle speed exceeds 20 km/h, and the chassis stability function is not triggered or degraded, a recovery torque adjustment can be started, the front axle torque may be adjusted to the front axle preset torque, and the rear axle torque may be adjusted to the rear axle preset torque, to improve vehicle stability. If any condition is not met, it indicates that the torque adjustment may not be performed on the vehicle currently, or a module with a higher priority controls the vehicle.

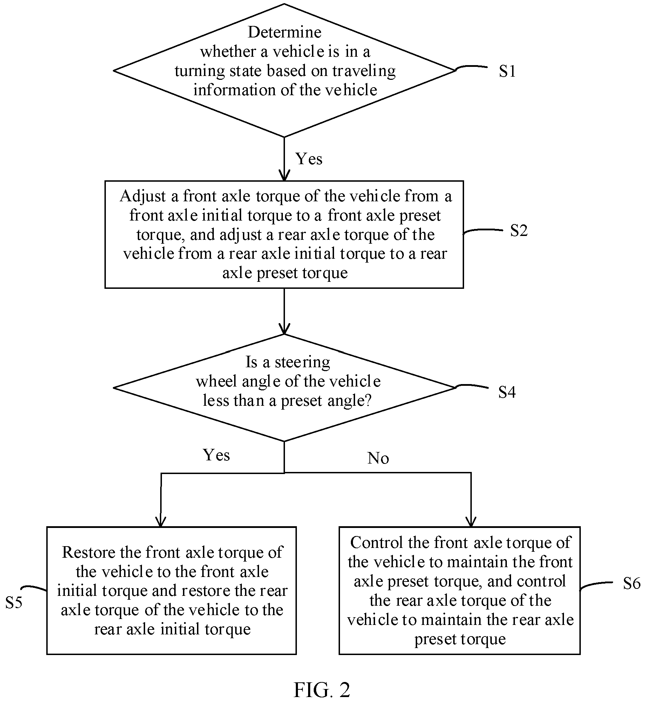

As shown in FIG. 2, in a possible implementation, after step S2, the method further includes the following steps.

S4: Determine whether the steering wheel angle of the vehicle is less than a preset angle.

If the steering wheel angle of the vehicle is less than the preset angle, step S5 is performed.

S5: Restore the front axle torque of the vehicle to the front axle initial torque, and restore the rear axle torque of the vehicle to the rear axle initial torque.

The vehicle has finished turning, and the steering wheel is in a process of returning to a neutral position. The front axle torque of the vehicle is restored to the front axle initial torque, and the rear axle torque of the vehicle is restored to the rear axle initial torque, so that the vehicle maintains an initial traveling status.

If the steering wheel angle of the vehicle is not less than the preset angle, step S6 is performed.

S6: Control the front axle torque to maintain the front axle preset torque, and control the rear axle torque of the vehicle to maintain the rear axle preset torque.

The steering wheel angle can be detected to determine whether the vehicle has finished turning, so that the torque can be adjusted based on an actual traveling status of the vehicle. This improves energy recovery efficiency of the vehicle, and also improves maneuverability and stability of the vehicle.

In a possible implementation, the preset angle is 20°. A value of the preset angle may be adjusted based on an actual requirement. Generally, an angle for determining whether the vehicle ends the turning state is less than an angle for determining whether the vehicle enters the turning state, and there is a specific difference between the angles. For example, when the vehicle enters the turning state, the steering wheel angle of the vehicle needs to exceed 30°. When the vehicle ends the turning state, the steering wheel angle of the vehicle is less than 20°.

In a turning process, a driver may adjust the steering wheel angle within a specific range based on an actual requirement. Such a design can help reduce a possibility of misjudgment on whether the vehicle is in the turning state when the driver adjusts the steering wheel angle slightly. Because an angle for determining whether the vehicle ends the turning state is less than an angle for determining whether the vehicle enters the turning state and has a specific difference, when the driver reduces the steering wheel angle in the turning process, it can still be determined that the vehicle is in the turning state, to reduce a possibility of repeatedly adjusting the front axle torque and the rear axle torque when the driver adjusts the steering wheel angle slightly. This helps improve stability and maneuverability of the vehicle, and better meet an actual use requirement.

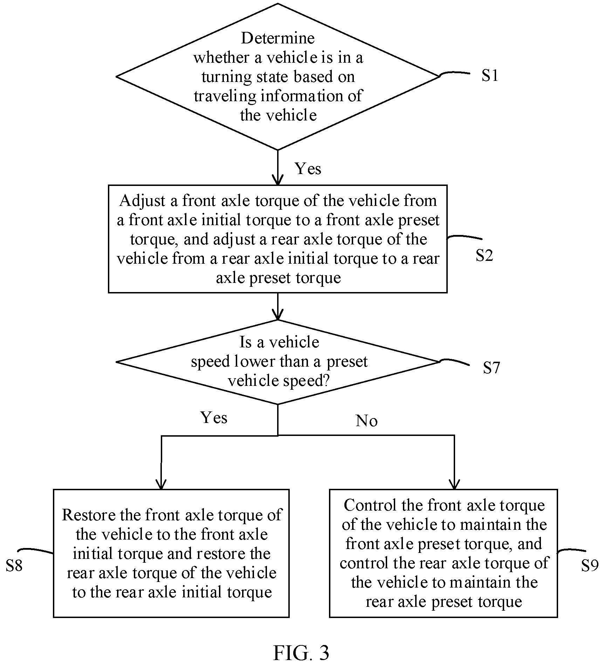

As shown in FIG. 3, in a possible implementation, after step S2, the method further includes the following steps.

S7: Determine whether a vehicle speed of the vehicle is less than a preset vehicle speed.

If the vehicle speed of the vehicle is less than the preset vehicle speed, step S8 is performed. If the vehicle speed of the vehicle is not less than the preset vehicle speed, step S9 is performed.

S8: Restore the front axle torque of the vehicle to the front axle initial torque, and restore the rear axle torque of the vehicle to the rear axle initial torque.

S9: Control the front axle torque of the vehicle to maintain the front axle preset torque, and control the rear axle torque of the vehicle to maintain the rear axle preset torque.

When the vehicle speed decreases, because stability of the vehicle is high when the vehicle travels at a low speed, and impact of energy recovery on the stability of the vehicle is low, it is unnecessary to enhance the stability of the vehicle by adjusting a recovery torque, so that adjustment of the front axle torque and the rear axle torque may be ended, and the torques are respectively restored to states before the adjustment.

In a possible implementation, the preset vehicle speed is 15 kilometers per hour.

When the vehicle speed is less than 15 kilometers per hour, it may be considered that the vehicle is in a low-speed traveling status. When the vehicle travels at a low speed, maneuverability and stability of the vehicle are high, and impact of the energy recovery scenario on stability of the vehicle. Even if the vehicle is in the turning state, it is unnecessary to enhance the stability of the vehicle by adjusting the torque of the vehicle.

In a possible implementation, when it is determined that the vehicle enters the turning state, the vehicle speed needs to exceed 20 kilometers per hour, and when it is determined that the vehicle ends the turning state, the vehicle speed needs to be less than 15 kilometers per hour.

In a traveling process of the vehicle, the vehicle speed may change and easily fluctuate near a critical value of the preset vehicle speed. Therefore, there is a specific difference between a vehicle speed for determining that the vehicle enters the turning state and a vehicle speed for determining that the vehicle ends the turning state, to provide specific buffer space, and reduce a possibility that the torque is frequently adjusted between the turning state and the non-turning state when the vehicle speed fluctuates.

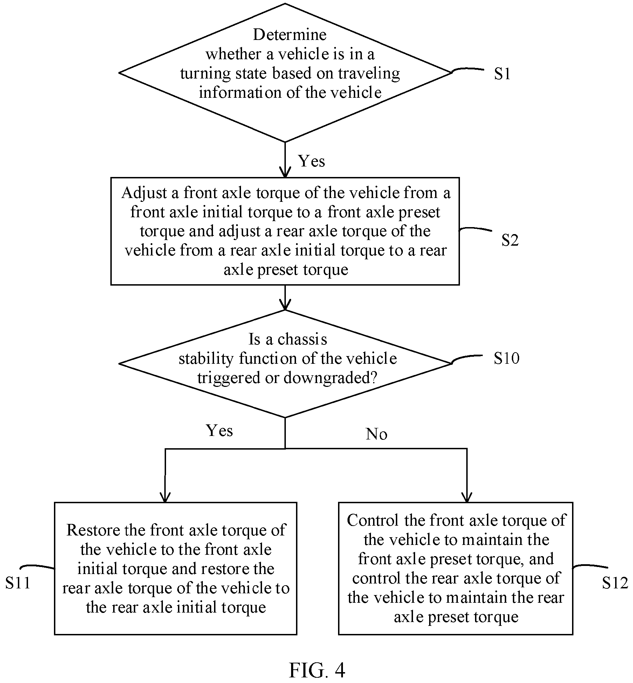

As shown in FIG. 4, in a possible implementation, after step S2, the method further includes the following steps.

S10: Determine whether a chassis stability function of the vehicle is triggered or degraded.

If the chassis stability function of the vehicle is triggered or degraded, step S11 is performed. If the chassis stability function of the vehicle is not triggered or degraded, step S12 is performed.

S11: Restore the front axle torque of the vehicle to the front axle initial torque, and restore the rear axle torque of the vehicle to the rear axle initial torque.

S12: Control the front axle torque of the vehicle to maintain the front axle preset torque, and control the rear axle torque of the vehicle to maintain the rear axle preset torque.

When the chassis stability function is triggered or degraded, it indicates that the vehicle is currently in an extreme condition and has poor stability, and the vehicle needs to be controlled by using the chassis stability function, to improve stability of the vehicle. Compared with that in which torque adjustment in the energy recovery scenario, the chassis stability function has a higher priority in this case. Therefore, the recovery torque adjustment needs to be ended, and the chassis stability function takes over the control of the vehicle.

According to the torque vector control method in the energy recovery scenario provided in this embodiment of this application, when energy recovery is enabled for the vehicle and a torque adjustment function is enabled, the steering wheel angle, the vehicle speed, and the chassis stability function status of the vehicle may be detected. When the steering wheel angle of the vehicle exceeds 30°, the vehicle speed exceeds 20 kilometers per hour, and the chassis stability function is not triggered or degraded, the vehicle is in the turning state, and the front axle torque and the rear axle torque of the vehicle are adjusted, to make the front axle torque and the rear axle torque become preset torques. In a possible implementation, an offline model may be preset, and the vehicle corresponds to different torque distribution in different turning states. During traveling, the torque of the vehicle is adjusted based on the offline model, to improve stability of the vehicle while energy recovery is performed. When the steering wheel angle of the vehicle is less than 20°, the vehicle speed is less than 15 kilometers per hour, and the chassis stability function is triggered or degraded, the torque adjustment ends when the vehicle meets one or more of the foregoing conditions.

The torque vector control method provided in embodiments of this application may be manually enabled or disabled by using a button or the like, or may be bound to a driving mode to be automatically enabled or disabled.

The torque vector control method provided in embodiments of this application may be implemented by using a detection module, a determining module, a control module, an execution module, and a monitoring module. The detection module is configured to collect the traveling information of the vehicle, including but not limited to collecting information like the vehicle speed and a yaw rate by using a sensor, collecting a brake system feedback input, and a vehicle dashboard or button input, and collecting information like a steering wheel angle and an angle speed that are entered by a driver. The determining module can determine, based on the collected information, whether torque vector distribution is in a standby mode, whether a current function meets a takeover condition, and a current control mode. When the torque vector distribution is in an enabled state, and requirements of the steering wheel angle and the vehicle speed are met, and the chassis stability function is not triggered or degraded, the torque vector distribution is enabled. When one or more of the following conditions are met: the steering wheel angle is less than a preset angle, the vehicle speed is less than a preset vehicle speed, and the chassis stability function takes over, the torque vector distribution is disabled. In the energy recovery scenario, for example, when the driver generates a steering action in a braking condition, a single-pedal recovery condition, or a coasting recovery condition, the control module dynamically adjusts the braking torques of the front and rear motors by using a vehicle control unit, and distributes the received required electric braking torques based on a steering requirement entered by the driver. The execution module tracks, by using a motor control unit, a target torque delivered by the vehicle control unit. It should be further noted that a specific execution manner of the motor control unit is not limited, and different motor configurations or closed-loop methods may be used. The monitoring module is configured to monitor overall program execution. When a fault or an error occurs in an execution process, the monitoring module can provide feedback in time.

In a possible implementation, the front axle preset torque includes a front axle slip-based feedback torque and a front axle maneuverability-based feedback torque, and the rear axle preset torque includes a rear axle slip-based feedback torque and a rear axle maneuverability-based feedback torque. Step S2 may specifically include:
when a difference between the front axle slip-based feedback torque and an expected slip-based feedback torque exceeds a preset range, adjusting the front axle slip-based feedback torque, for the difference between the front axle slip-based feedback torque and the expected slip-based feedback torque to fall within the preset range; when a difference between the rear axle slip-based feedback torque and the expected slip-based feedback torque exceeds the preset range, adjusting the rear axle slip-based feedback torque, for the difference between the rear axle slip-based feedback torque and the expected slip-based feedback torque to fall within the preset range; when a difference between the front axle maneuverability-based feedback torque and an expected maneuverability-based feedback torque exceeds a preset range, adjusting the front axle maneuverability-based feedback torque, for the difference between the front axle maneuverability-based feedback torque and the expected maneuverability-based feedback torque to fall within the preset range; and when a difference between the rear axle maneuverability-based feedback torque and the expected maneuverability-based feedback torque exceeds the preset range, adjusting the rear axle maneuverability-based feedback torque, for the difference between the rear axle maneuverability-based feedback torque and the expected maneuverability-based feedback torque to fall within the preset range.

The slip-based feedback torques and the maneuverability-based feedback torques of the front axle and the rear axle are adjusted based on the expected torque. The preset range may be 0, or may be set based on an actual requirement. In a possible implementation, the front axle slip-based feedback torque may be reduced when the front axle slip-based feedback torque is greater than the expected slip-based feedback torque; or the front axle slip-based feedback torque may be increased when the front axle slip-based feedback torque is less than the expected slip-based feedback torque, so that the front axle slip-based feedback torque has a tendency to change to be closer to the expected slip-based feedback torque. The rear axle slip-based feedback torque may be reduced when the rear axle slip-based feedback torque is greater than the expected slip-based feedback torque; or the rear axle slip-based feedback torque may be increased when the rear axle slip-based feedback torque is less than the expected slip-based feedback torque, so that the rear axle slip-based feedback torque has a tendency to change to be closer to the expected slip-based feedback torque. The front axle maneuverability-based feedback torque may be increased when the front axle maneuverability-based feedback torque is less than the expected maneuverability-based feedback torque, so that the front axle maneuverability-based feedback torque has a tendency to change to be closer to the expected maneuverability-based feedback torque. The rear axle maneuverability-based feedback torque may be reduced when the rear axle maneuverability-based feedback torque is greater than the expected maneuverability-based feedback torque; or the rear axle maneuverability-based feedback torque may be increased when the rear axle maneuverability-based feedback torque is less than the expected maneuverability-based feedback torque, so that the rear axle maneuverability-based feedback torque has a tendency to change to be closer to the expected maneuverability-based feedback torque.

Stability and maneuverability of the vehicle in the turning state in the energy recovery scenario can be enhanced by adjusting the slip torque and the maneuverability torque. This improves driving experience and better meets an actual use requirement.

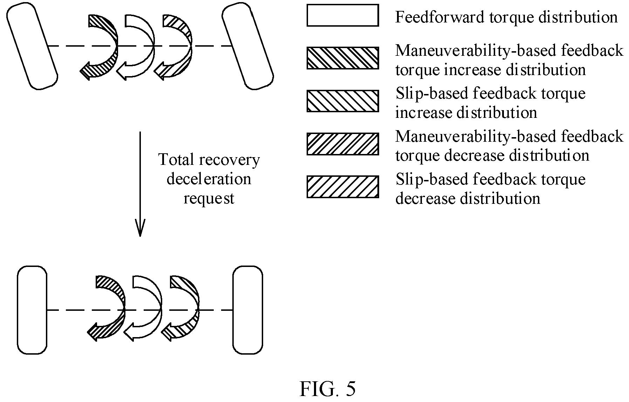

As shown in FIG. 5, in a possible implementation, energy recovery may be enabled in a case like vehicle braking, to generate deceleration. The feedforward controller may calculate a feedforward torque based on a steering wheel angle, an accelerator pedal travel, and the like, and distribute the feedforward torque to the front axle and the rear axle. In the energy recovery scenario, an attachment limit of a rear axle tire may be low, and sliding is more likely to occur. Therefore, rear axle slip-based feedback torque distribution of the rear axle may be reduced, and front axle slip-based feedback torque distribution of the front axle may be increased, to reduce a possibility of vehicle sliding. To improve vehicle maneuverability and improve vehicle steering flexibility, front axle maneuverability-based feedback torque distribution of the front axle may be reduced, and rear axle maneuverability-based feedback torque distribution of the rear axle may be increased.

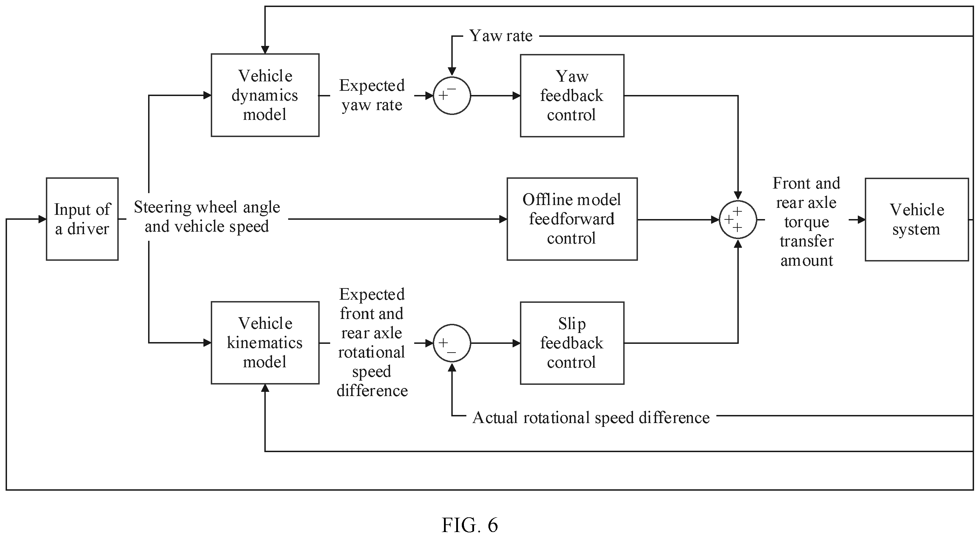

As shown in FIG. 6, an input of a driver is collected, including but not limited to a steering wheel angle, a vehicle speed, and the like. Based on a vehicle dynamics model, information about a yaw rate is calculated, and in an adjustment process, the yaw rate is changed to be close to an expected yaw rate. Based on a vehicle kinematics model, slip feedback control is calculated, and an actual front and rear axle rotational speed difference is changed to an expected front and rear axle rotational speed difference. Offline model feedforward control provides a pre-calibrated torque distribution solution based on information like a steering wheel angle and a vehicle speed that are entered by a driver. Yaw feedback control, offline model feedforward control, and slip feedback control are comprehensively used to calculate a front and rear axle torque transfer amount, and the front and rear axle torque transfer amount is fed back to a vehicle system, to adjust the front axle torque and the rear axle torque, so as to improve creative stability of a vehicle in a turning process. The vehicle system may feed back torque adjustment information to the driver in real time, so that the driver learns of a current status of the vehicle.

The solution provided in embodiments of this application is based on a seven-degree-of-freedom vehicle dynamics model, and uses a vehicle steering characteristic represented by a steering angle as an optimization objective. A specific steering characteristic is set, and the dynamics model is used as an equation constraint, to optimize and solve reference yaw rates and feedforward yaw moments at different vehicle speeds and steering angles. Then, yaw rate closed-loop feedback adjustment is added to compensate for feedforward control. Then, feedback control introduced based on a rotational speed difference between drive motors is added, to form a pre-control effect of vehicle slip. This improves maneuverability and stability of the vehicle.

At least one motor is disposed on each of a front axle and a rear axle of the vehicle. In a possible implementation, the vehicle includes two motors, one motor is located on the front axle, and one motor is located on the rear axle, to form a dual-motor distributed drive configuration.

In a possible implementation, a first motor is disposed on the front axle, a second motor is disposed on the rear axle, and the vehicle includes two first motors and/or the vehicle includes two second motors. The vehicle may be provided with two first motors on the front axle and one second motor on the rear axle, or may be provided with one first motor on the front axle and two second motors on the rear axle, or may be provided with two first motors on the front axle and two second motors on the rear axle. In other words, the vehicle may include three or more motors. Step S2 may include:
adjusting a torque of the first motor based on the front axle preset torque, and adjusting a torque of the second motor based on the rear axle preset torque.

When the front axle and/or the rear axle include two motors, that is, when the vehicle is in a three-motor distributed drive configuration or a four-motor distributed drive configuration, the front axle torque and/or the rear axle torque need to be distributed between two motors on a same axle. A total torque of the two motors on the front axle meets the front axle preset torque, and/or the two motors on the rear axle meet the rear axle preset torque, to improve stability and maneuverability of the vehicle.

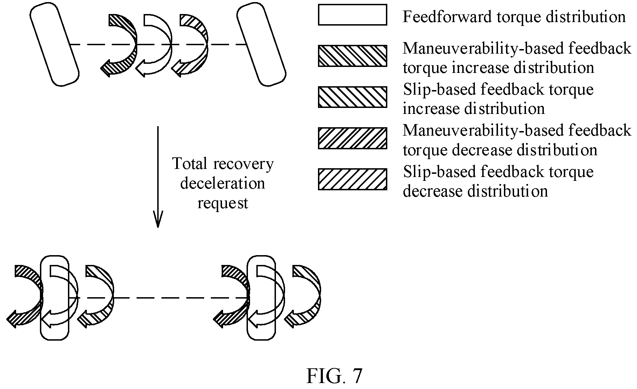

As shown in FIG. 7, for example, one second motor is disposed on the front axle, and two second motors are disposed on the rear axle. A torque of the rear axle needs to be distributed between the two second motors. In a possible implementation, adjustment trends of the two motors on the rear axle may be the same or different, and distribution may be specifically performed based on an actual vehicle status.

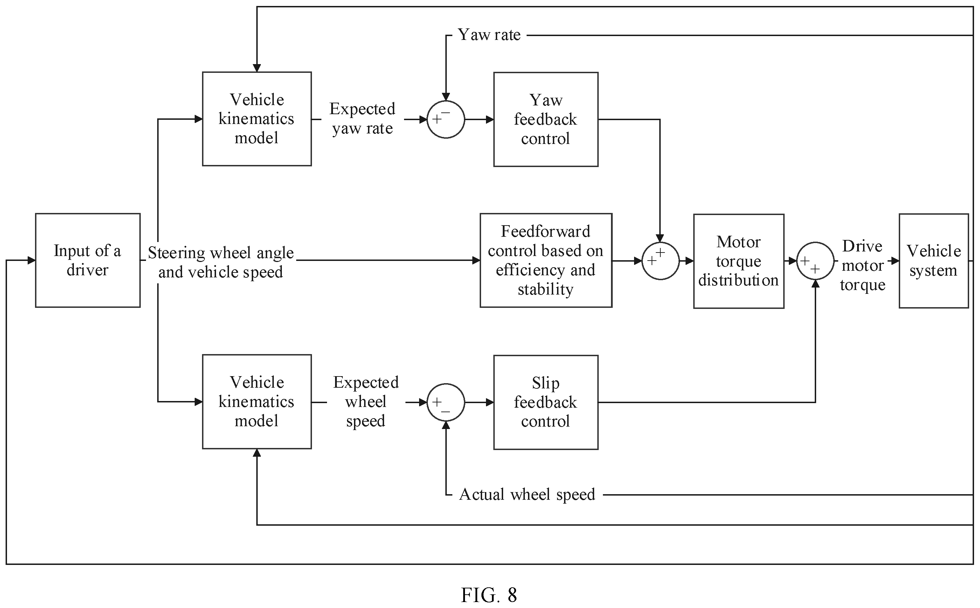

As shown in FIG. 8, an input of a driver is collected, including but not limited to a steering wheel angle, a vehicle speed, and the like. Based on a vehicle dynamics model, information about a yaw rate is calculated, and in an adjustment process, the yaw rate is changed to be close to an expected yaw rate. Based on a vehicle kinematics model, slip feedback control is calculated, and an actual front and rear axle rotational speed difference is changed to be close to an expected front and rear axle rotational speed difference. Feedforward control based on efficiency and stability provides a pre-calibrated torque distribution solution based on information like a steering wheel angle and a vehicle speed that are entered by a driver. Motor torque distribution is performed based on both yaw feedback control and offline model feedforward control, and then a drive motor torque is calculated based on the slip feedback control, and is fed back to a vehicle system, to adjust the front axle torque and the rear axle torque, so as to improve creative stability of a vehicle in a turning process. The vehicle system may feed back torque adjustment information to the driver in real time, so that the driver learns of a current status of the vehicle.

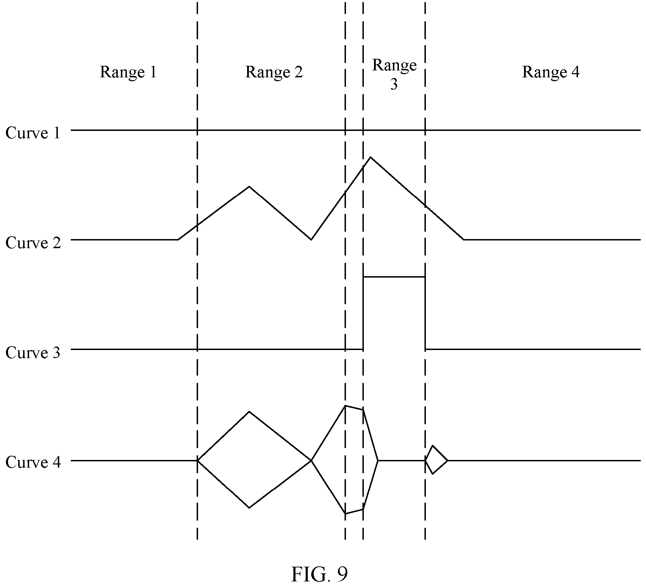

As shown in FIG. 9, a curve 1 in the figure represents a required torque, a curve 2 represents a steering wheel angle, a curve 3 represents a chassis stability function flag bit, and a curve 4 represents torque distribution of the front axle and the rear axle. An interval 1 indicates that a torque distribution function is in a standby state, an interval 2 corresponds to normal triggering of the torque distribution function, an interval 3 corresponds to triggering of a chassis stability function, and a small interval between the interval 2 and the interval 3 indicates a time period in which the vehicle just enters an unstable state but the chassis stability function is not triggered. An interval 4 indicates that the chassis stability function exits. The required torque is a torque required by a driver. For example, a torque requirement is generated by the driver by controlling an accelerator pedal and a brake pedal. When the driver turns a steering wheel by an angle greater than a specific angle, and conditions of a vehicle speed and the chassis stability function are met, a recovery torque distribution function is normally triggered. When the function is triggered, torques of the front axle and the rear axle may change, that is, one increases and the other decreases. A greater steering wheel angle indicates a greater difference between the front axle and the rear axle. When the chassis stability function is triggered, the torque recovery distribution function gradually exits.

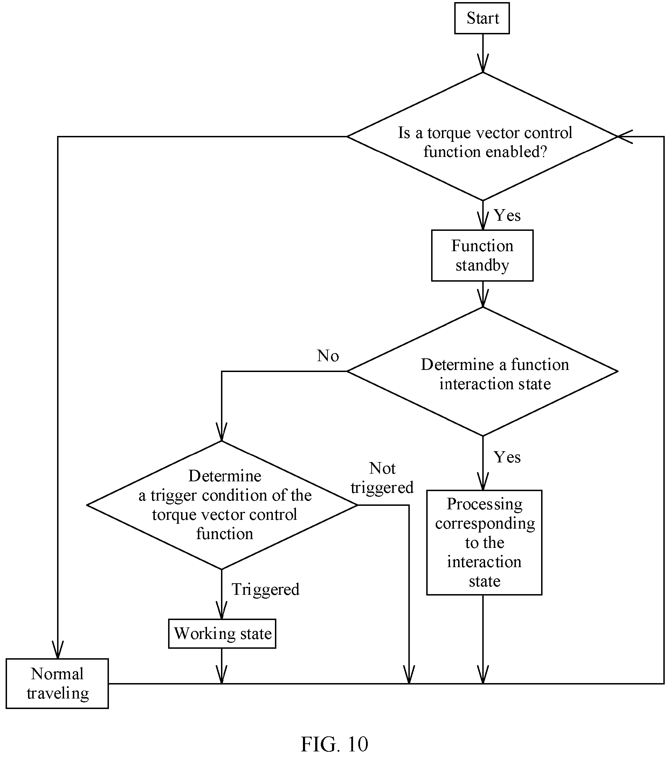

As shown in FIG. 10, when a torque vector control method is performed and a vehicle is in an energy recovery scenario, whether a torque vector control function is enabled is determined. If the torque vector control function is enabled, the vehicle enters a standby state. If the torque vector control function is disabled, the vehicle travels normally. When the function is in the standby state, a function interaction state is determined. Determining includes but is not limited to a chassis stability function. When there is function interaction, for example, the chassis stability function is triggered or degraded, processing is performed based on the function interaction state. A torque distribution function exits control based on a specific slope. When there is no function interaction, whether a condition for enabling or disabling the torque vector distribution is met is determined based on a steering wheel angle, a vehicle speed, and the like. When the enabling condition is met, the torque vector distribution is enabled. When the disabling condition is met, the torque vector distribution is disabled. During driving, the driver may enable or disable the function at any time.

The control module may include three working modes. A first working mode corresponds to triggering and enabling of the torque vector control function. Torque recovery is performed based on a current driver requirement and a basic distribution result, and torque recovery of each drive motor is redistributed. A second working mode corresponds to a turning end state, and the torque vector control function needs to be exited. At a specific slope, a function recovery torque converges to a distribution result that a torque mass control function is not triggered, that is, gradually restores to an initial torque. In a third working state, a function recovery torque is fast distributed based on a current steering characteristic state at a specific slope, to maintain a steering characteristic of the vehicle. After the third working state ends, the vehicle may switch to the first working mode. The first working mode may correspond to function enabling, the second working mode may correspond to a function exit process, and the third working mode may correspond to a function action process. The process may be a process of adjusting a torque after energy recovery is enabled, or may be a process in which the torque vector control function takes over when another torque control function, for example, the chassis stability function, exits. The torque may change at a specific slope, or may change along a curve with certain curvature. In other words, the torque continuously changes.

Based on the torque vector control method in the energy recovery scenario in the foregoing embodiments, an embodiment of this application further provides a storage medium. The storage medium is configured to store the torque vector control method in the energy recovery scenario according to any one of the foregoing embodiments.

An embodiment of this application further provides a vehicle. The vehicle includes a front axle and a rear axle. A control component of the vehicle is configured to determine, based on traveling information of the vehicle, whether the vehicle is in a turning state. When the vehicle is in the turning state, a front axle initial torque of the vehicle is adjusted to a front axle preset torque, and a rear axle initial torque of the vehicle is adjusted to a rear axle preset torque. When the vehicle is not in the turning state, the vehicle maintains the front axle initial torque and the rear axle initial torque.

In the solution provided in this embodiment of this application, a feature of a plurality of actuators (motors) in a distributed drive configuration can be used, and torque distribution is performed between the plurality of actuators (motors), to implement entire-vehicle collaborative control. An existing VDC vehicle domain controller and a motor control unit are used to adjust a steering characteristic of the vehicle through dynamic torque adjustment, to improve vehicle stability, maneuverability, and motion performance, so as to improve driving experience.

This embodiment of this application provides a torque control method in an energy recovery scenario, a storage medium, and a vehicle. A seven-degree-of-freedom vehicle model is established, and a required steering characteristic represented by a steering angle in each driving mode is used as an optimization objective to obtain a feedforward reference torque distribution ratio of the vehicle in different states through solving, to establish feedback control. Feedback correction is performed on feedforward control based on a reference yaw rate in each driving mode, to obtain a final distribution ratio. For a multi-motor drive vehicle, a recovery torque of each drive motor is distributed when a driver performs a steering input, to improve maneuverability of the entire vehicle. According to an optional preset reference steering characteristic, torque distribution is implemented, and a feedforward error caused by wear of the vehicle is corrected by using the feedback control, to implement yaw control of the steering characteristic, so as to improve maneuverability and stability. Because the vehicle is in the energy recovery scenario, unexpected steering of the driver may be unstable when there is no torque request. Energy recovery is equivalent to generating a braking force on a wheel, but the braking force is not actively performed by the driver. In a distribution ratio of a feedforward controller, stability and energy recovery efficiency are comprehensively considered to determine a pre-distribution ratio. In addition, based on a current transverse and longitudinal motion status of the vehicle, it is obtained that under a geometric condition, an ideal inter-axis rotational speed difference of the vehicle is based on a rotational speed of a front axle, and a rotational speed of an inner wheel is used as a rotational speed of a rear axle, to adjust a transferred torque value. The pre-distribution ratio is specified and a rotational speed difference between the drive motors is controlled, implementing slip pre-control while improving entire-vehicle stability and recovery efficiency.

In the descriptions of this specification, a description of a reference term like "an embodiment", "some embodiments", "an example", "a specific example", or "some examples" means that a specific feature, structure, material, or characteristic that is described with reference to the embodiment or the example is included in at least one embodiment or example of this application. In the specification, the foregoing example expressions of the terms are not necessarily with respect to a same embodiment or example. In addition, the described specific features, structures, materials, or characteristics may be combined in an appropriate manner in any one or more of the embodiments or examples. In addition, a person skilled in the art may integrate or combine different embodiments or examples and characteristics of different embodiments or examples described in the specification, as long as they do not conflict each other.

In addition, the terms "first" and "second" are merely intended for a purpose of description, and shall not be understood as an indication or implication of relative importance or implicit indication of the number of indicated technical features. Therefore, a feature limited by "first" or "second" may explicitly or implicitly include at least one of the feature. In description of this application, "a plurality of" means "at least two", such as "two" or "three", unless otherwise clearly and specifically limited.

Any process or method in the flowcharts or described herein in another manner may be understood as indicating a module, a segment, or a part including code of one or more executable instructions for implementing a particular logical function or process step. In addition, the scope of preferred embodiments of this application includes other implementations that do not follow the order shown or discussed, including performing, according to related functions, the functions basically simultaneously or in a reverse order, which should be understood by technical personnel in the technical field to which embodiments of this application belong.

## Claims

1. A torque vector control method in an energy recovery scenario, wherein the torque vector control method comprises:
determining, based on traveling information of a vehicle, whether the vehicle is in a turning state;
if the vehicle is in the turning state, adjusting a front axle torque of the vehicle from a front axle initial torque to a front axle preset torque, and adjusting a rear axle torque of the vehicle from a rear axle initial torque to a rear axle preset torque; or
if the vehicle is not in the turning state, controlling the vehicle to maintain a current front axle initial torque and a current rear axle initial torque.

2. The torque vector control method in the energy recovery scenario according to claim 1, wherein before determining, based on the traveling information of the vehicle, whether the vehicle is in the turning state, the method comprises:
collecting information output or stored by at least one of a brake electronic control unit, a vehicle control unit, a motor control unit, a vehicle dashboard, a button input, a vehicle sensor, and a signal processing module, and using the information as the traveling information.

3. The torque vector control method in the energy recovery scenario according to claim 2, wherein the traveling information comprises steering wheel angle information.

4. The torque vector control method in the energy recovery scenario according to claim 3, wherein the traveling information comprises vehicle speed information and/or chassis stability information.

5. The torque vector control method in the energy recovery scenario according to claim 4, wherein information output or stored by at least one of an anti-lock braking system, a torque control system, and an electronic stability control is collected and used as the chassis stability information.

6. The torque vector control method in the energy recovery scenario according to claim 5, wherein the step of determining, based on the traveling information of the vehicle, whether the vehicle is in the turning state comprises:
when a steering wheel angle of the vehicle exceeds 30°, a vehicle speed exceeds 20 kilometers per hour, and a chassis stability function is not triggered or not degraded, determining that the vehicle is in the turning state; or
when a steering wheel angle of the vehicle does not exceed 30°, a vehicle speed does not exceed 20 kilometers per hour, or a chassis stability function is not triggered or not degraded, determining that the vehicle is not in the turning state.

7. The torque vector control method in the energy recovery scenario according to claim 1, wherein after adjusting each of the front axle torque and the rear axle torque of the vehicle from the initial torque to the preset torque, the torque vector control method in the energy recovery scenario comprises:
determining whether a steering wheel angle of the vehicle is less than a preset angle; and
if the steering wheel angle of the vehicle is less than the preset angle, restoring the front axle torque of the vehicle to the front axle initial torque, and restoring the rear axle torque of the vehicle to the rear axle initial torque; or
if the steering wheel angle of the vehicle is not less than the preset angle, controlling the front axle torque of the vehicle to maintain the front axle preset torque, and controlling the rear axle torque of the vehicle to maintain the rear axle preset torque.

8. The torque vector control method in the energy recovery scenario according to claim 7, wherein the preset angle is 20°.

9. The torque vector control method in the energy recovery scenario according to claim 1, wherein after adjusting the front axle torque of the vehicle from the front axle initial torque to the front axle preset torque and adjusting the rear axle torque of the vehicle from the rear axle initial torque to the rear axle preset torque, the torque vector control method in the energy recovery scenario comprises:
determining whether a vehicle speed of the vehicle is less than a preset vehicle speed; and
if the vehicle speed of the vehicle is less than the preset vehicle speed, restoring the front axle torque of the vehicle to the front axle initial torque, and restoring the rear axle torque of the vehicle to the rear axle initial torque; or
if the vehicle speed of the vehicle is not less than the preset vehicle speed, controlling the front axle torque of the vehicle to maintain the front axle preset torque, and controlling the rear axle torque of the vehicle to maintain the rear axle preset torque.

10. The torque vector control method in the energy recovery scenario according to claim 9, wherein the preset vehicle speed is 15 kilometers per hour.

11. The torque vector control method in the energy recovery scenario according to claim 1, wherein after adjusting the front axle torque of the vehicle from the front axle initial torque to the front axle preset torque and adjusting the rear axle torque of the vehicle from the rear axle initial torque to the rear axle preset torque, the torque vector control method in the energy recovery scenario comprises:
determining whether a bottom plate stability function of the vehicle is triggered or degraded; and
if the bottom plate stability function of the vehicle is triggered or degraded, restoring the front axle torque of the vehicle to the front axle initial torque, and restoring the rear axle torque of the vehicle to the rear axle initial torque; or
if the bottom plate stability function of the vehicle is not triggered or degraded, controlling the front axle torque of the vehicle to maintain the front axle preset torque, and controlling the rear axle torque of the vehicle to maintain the rear axle preset torque.

12. The torque vector control method in the energy recovery scenario according to any one of claims 1 to 11, wherein the preset torque of the front axle torque comprises a front axle slip-based feedback torque and a front axle maneuverability-based feedback torque, the preset torque of the rear axle torque comprises a rear axle slip-based feedback torque and a rear axle maneuverability-based feedback torque, the vehicle comprises at least two motors, at least one motor is located on a front axle of the vehicle, and at least one motor is located on a rear axle of the vehicle; and
the step of adjusting the front axle torque of the vehicle from the front axle initial torque to the front axle preset torque and adjusting the rear axle torque of the vehicle from the rear axle initial torque to the rear axle preset torque comprises:
when a difference between the front axle slip-based feedback torque and an expected slip-based feedback torque exceeds a preset range, adjusting the front axle slip-based feedback torque, for the difference between the front axle slip-based feedback torque and the expected slip-based feedback torque to fall within the preset range;
when a difference between the rear axle slip-based feedback torque and the expected slip-based feedback torque exceeds the preset range, adjusting the rear axle slip-based feedback torque, for the difference between the rear axle slip-based feedback torque and the expected slip-based feedback torque to fall within the preset range;
when a difference between the front axle maneuverability-based feedback torque and an expected maneuverability-based feedback torque exceeds a preset range, adjusting the front axle maneuverability-based feedback torque, for the difference between the front axle maneuverability-based feedback torque and the expected maneuverability-based feedback torque to fall within the preset range; and
when a difference between the rear axle maneuverability-based feedback torque and the expected maneuverability-based feedback torque exceeds the preset range, adjusting the rear axle maneuverability-based feedback torque, for the difference between the rear axle maneuverability-based feedback torque and the expected maneuverability-based feedback torque to fall within the preset range.

13. The torque vector control method in the energy recovery scenario according to claim 12, wherein a first motor is disposed on the front axle, a second motor is disposed on the rear axle, and two first motors are disposed on the front axle and/or two second motors are disposed on the rear axle; and
the step of adjusting the front axle torque of the vehicle from the front axle initial torque to the front axle preset torque and adjusting the rear axle torque of the vehicle from the rear axle initial torque to the rear axle preset torque comprises:
adjusting a torque of the first motor based on the front axle preset torque, and adjusting a torque of the second motor based on the rear axle preset torque.

14. A storage medium, wherein the storage medium is configured to store the torque vector control method in the energy recovery scenario according to any one of claims 1 to 13.

15. A vehicle, comprising a front axle and a rear axle, wherein the vehicle comprises a control component, and the control component is configured to determine, based on traveling information of the vehicle, whether the vehicle is in a turning state; and when the vehicle is in the turning state, a front axle initial torque of the vehicle is adjusted to a front axle preset torque, and a rear axle torque of the vehicle is adjusted to a rear axle initial torque; or when the vehicle is not in the turning state, the vehicle maintains a front axle initial torque and a rear axle initial torque.
